# EUROPEAN PATENT APPLICATION

(11) **EP 4 793 019 A1**
(43) Date of publication of application: **19.08.2026**
(21) Application number: 24876906.9
(22) Date of filing: 04.07.2024
(51) Int. Cl.: B29C 45/76

(54) **INFORMATION PROCESSING METHOD, COMPUTER PROGRAM, AND INFORMATION PROCESSING DEVICE**

(30) Priority: 13.10.2023 JP 2023177753
(71) Applicant: The Japan Steel Works, Ltd., Tokyo 141-0032 (JP)
(72) Inventor: HIRANO, Takayuki, Tokyo 141-0032 (JP)
(74) Representative: Simmons & Simmons LLP (Munich)
(86) International application number: PCT/JP2024/024163
(87) International publication number: WO 2025/079305

(57) **Abstract**

To provide an information processing method and the like with which it is possible to improve worker motivation. In the information processing method, a process is implemented by computer to acquire identification information on a plurality of workers who perform work related to a molding machine and work information related to the work performed by each worker, to rank the plurality of workers on the basis of the acquired work information on the plurality of workers, and to provide a ranking result to the plurality of workers.

## Description

### Technical Field

The present invention relates to an information processing method, a computer program and an information processing apparatus.

### Background Art

In a factory where a molding work is performed, multiple workers are engaged in the work. A technique that assists such workers in performing their work has been proposed. Patent Literature 1, for example, discloses a molding education device that allows users to learn how to set appropriate molding conditions without performing molding of a resin molded product using a real molding machine and real molding materials.

### Citation List

### Patent Literature

Patent Literature 1: Japanese Patent Application Laid-Open Publication No. 2020-187174

### Summary of Invention

### Technical Problems

There is, however, a problem that the molding education device described in Patent Literature 1 does not consider the improvement of the worker's motivation to work.

An object of the present disclosure is to provide an information processing method and the like that can improve the worker's motivation to work.

### Solution to Problems

An information processing method according to one aspect of the present disclosure causes a computer to execute processing of: acquiring identification information of a plurality of workers who perform work related to a molding machine and work information on work performed by each of the workers; ranking the plurality of workers based on the acquired work information of the plurality of workers; and providing the plurality of workers with a ranking result.

A computer program according to one aspect of the present disclosure causes a computer to execute processing of: acquiring identification information of a plurality of workers who perform work related to a molding machine and work information on work performed by each of the workers; ranking the plurality of workers based on the acquired work information of the plurality of workers; and outputting a ranking result to the plurality of workers.

An information processing apparatus according to one aspect of the present disclosure comprising a control unit executing processing of: acquiring identification information of a plurality of workers who perform work related to a molding machine and work information on work performed by each of the workers; ranking the plurality of workers based on the acquired work information of the plurality of workers; and outputting a ranking result to the plurality of workers. Advantageous Effects of Invention

According to the present disclosure, it is possible to improve the worker's motivation to work.

### Brief Description of Drawings

FIG. 1 is a diagram depicting an example of the configuration of an information processing system according to a present embodiment.
FIG. 2 is a block diagram illustrating an example of the configuration of an information processing apparatus.
FIG. 3 is a diagram illustrating an example of the contents of the information stored in a worker DB.
FIG. 4 is a diagram illustrating an example of the contents of the information stored in a work information DB.
FIG. 5 is a schematic diagram illustrating an example of a screen including a ranking result.
FIG. 6 is a flowchart depicting an example of a processing procedure for collecting work information.
FIG. 7 is a flowchart depicting an example of a processing procedure related to ranking.
FIG. 8 is a block diagram illustrating an example of the configuration of an information processing apparatus 1 according to Embodiment 2.
FIG. 9 is a flowchart depicting an example of a processing procedure to be executed by the information processing apparatus 1 according to Embodiment 2.

### Description of Embodiments

The present disclosure will be specifically described with reference to the drawings illustrating embodiments thereof.

### Embodiment 1

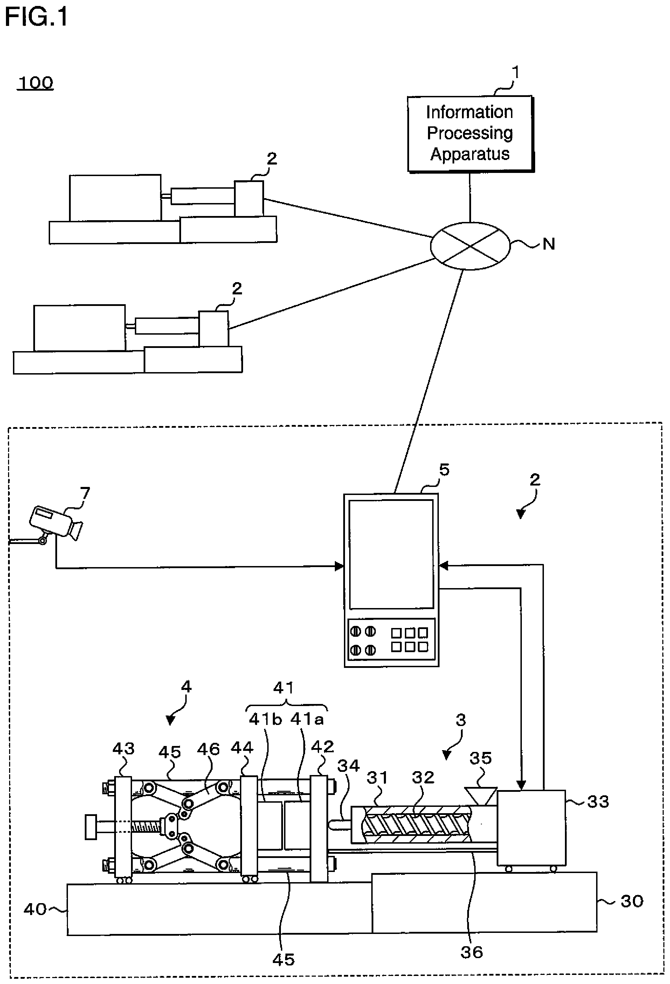

FIG. 1 is a diagram depicting an example of the configuration of an information processing system 100 according to a present embodiment. The information processing system 100 includes an information processing apparatus 1 as a main device. The information processing apparatus 1 is communicably connected to an injection molding machine 2 through a network N such as the Internet, LAN (Local Area Network) or the like.

While an injection molding machine is described as an example in the present embodiment, the molding machine in the present system may be an extrusion molding machine, a twin-screw extruder, a film molding machine, an MG molding machine, an inflation molding machine, a blow molding machine, a granulating machine or the like, not limited to the injection molding machine.

The information processing apparatus 1 is an information processing apparatus that can perform various types of information processing as well as transmission and reception of information, and is, for example, a server computer, a personal computer, a quantum computer or the like. The information processing apparatus 1 may be a local server installed in the same facility (factory or the like) as any injection molding machine 2 or a cloud server communicably connected to the injection molding machine 2 via the Internet or the like. The information processing apparatus 1 evaluates the work details performed by multiple workers engaged in molding work using the injection molding machine 2 and ranks the workers.

### <Injection Molding Machine 2>

The injection molding machine 2 is provided with an injection device 3 for plasticizing and injecting molding materials, a mold clamping device 4 for clamping a metal mold 41 and a control device 5.

The injection device 3 is situated on a base 30. The injection device 3 includes a heating cylinder 31, a screw 32 rotatably provided inside the heating cylinder 31 and a drive device 33 for driving the screw 32. The heating cylinder 31 is provided with a nozzle 34 at the leading edge thereof and a hopper 35 through which molding materials are fed near the rear edge of the heating cylinder 31. Inside or at the outer circumference of the heating cylinder 31, a heater (not illustrated) for melting molding materials is provided. The drive device 33, which contains a servo motor for injection and a ball screw (not illustrated), drives the screw 32 in a rotational direction and in an axial direction. When a resin material is fed from the hopper 35 and melted by rotation of the screw 32, the resin material is measured at the leading edge of the screw 32. When the screw 32 is driven in the axial direction, the resin material is injected.

The injection molding machine 2 is provided with a nozzle touch device 36 that moves the injection device 3 in the front-back direction (left-right direction in FIG.1). When the nozzle touch device 36 is driven, the injection device 3 is configured to move forward so that the nozzle 34 of the heating cylinder 31 touches a contact portion of a fixed platen 42.

The mold clamping device 4 is provided with the fixed platen 42 fixed on a bed 40, a mold clamping housing 43 slidably provided over the bed 40 and a movable platen 44 that similarly slides over the bed 40. The fixed platen 42 and the mold clamping housing 43 are coupled with multiple, for example, four tie-bars 45. The movable platen 44 is configured to be slidable between the fixed platen 42 and the mold clamping housing 43. Between the mold clamping housing 43 and the movable platen 44, a mold clamping mechanism 46 is provided. The mold clamping mechanism 46 is composed of a toggle mechanism, for example. Note that the mold clamping mechanism 46 may be formed by a direct pressure type clamping mechanism, that is, a clamping cylinder.

The fixed platen 42 is attached with a fixed mold 41a while the movable platen 44 is attached with a movable mold 41b. The mold clamping mechanism 46 is driven to open or close the metal mold 41. The metal mold 41 is provided with a movable unit such as a core mechanism, an ejector mechanism, a gate mechanism or the like and a temperature regulation mechanism or the like that are not illustrated. The metal mold 41 is exchangeable depending on the change of a molded product to be molded by the injection molding machine 2.

The control device 5 is a computer for controlling the action of the injection molding machine 2 and is connected to the injection device 3, the mold clamping device 4 and peripheral devices (not illustrated) in a wired or wireless manner. The peripheral devices are devices that form a system linked in conjunction with the molding machine 2. The peripheral devices include, for example, a feeder, a molded product takeout device, a molded product transfer device and a molded product inspection device.

The control device 5 includes, as hardware components, a CPU (Central Processing Unit) as an arithmetic unit (processor), a ROM (Read Only Memory), a RAM (Random Access Memory), a timer, an I/O terminal, a nonvolatile memory as a storage unit, a communication module as a communication unit, a touch panel and a soft key as an operation unit, a liquid crystal display panel and an organic EL (Electro Luminescence) display as a display unit, and a data input/output unit.

The arithmetic unit of the control device 5 transmits and receives various data to and from the information processing apparatus 1 through the communication unit. The arithmetic unit receives settings for molding conditions set by the worker through the operation unit. The arithmetic unit displays the set molding conditions, the state of the injection molding machine 2, the ranking results and the like through the display unit. Note that the display unit does not need to be provided on the control device 5, but may be a display on a machine separate from the control device 5, such as a computer, a tablet terminal, a smartphone or the like. The arithmetic unit acquires detection data detected by various sensors (not illustrated) provided in the injection molding machine 2 through the data input/output unit and outputs a control signal for controlling the operation of the injection molding machine 2 to the injection molding machine 2.

Note that the control device 5 and the information processing apparatus 1 may be a single processing apparatus shared by any control device 5 and any information processing apparatus 1, not limited to separate devices. The control device 5 may be configured to communicate with the information processing apparatus 1 via, for example, a data collection device as a Programmable Logic Controller (PLC), a relay device such as a router, gateway, and the like.

The number of injection molding machines 2 included in the information processing system 100 may be one, or three or more. The injection molding machines 2 included in the information processing system 100 may be of the same type or different type, may be installed in multiple factories, or may be owned by the same organization or different organizations.

Around the injection molding machine 2, one or more imaging devices 7 are provided. The imaging device 7, which is a device for taking an image of the worker who performs work related to the injection molding machine 2, includes, for example, a camera, a beacon, a laser sensor and a motion capture. By the imaging data taken by the imaging device 7, the action and position of the worker can be acquired. The imaging device 7, which is connected to the control device 5 in a wired or wireless manner, transmits the acquired imaging data to the information processing apparatus 1 through the control device 5. The imaging device 7 may transmit imaging data to the information processing apparatus 1 without involving the control device 5.

### <Information Processing Apparatus 1>

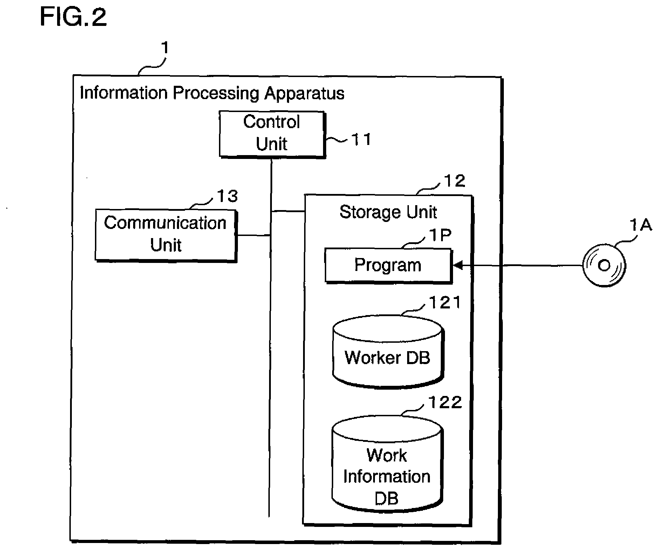

FIG. 2 is a block diagram illustrating an example of the configuration of the information processing apparatus 1. The information processing apparatus 1 is provided with a control unit 11, a storage unit 12 and a communication unit 13. The information processing apparatus 1 may be configured with multiple computers to perform distributed processing, may be realized by multiple virtual machines set up in a single server, or may be realized using a cloud server.

The control unit 11 is an arithmetic circuit containing one or more CPUs, GPUs (Graphics Processing Units), ROMs, RAMs and the like. The CPU or GPU provided in the control unit 11 executes various computer programs stored in the ROM and the storage unit 12 to control the operation of the hardware components described above. Note that each functional part of the information processing apparatus 1 may be realized in software or in hardware (e.g., FPGA or ASIC), or in combination thereof.

The storage unit 12 has a nonvolatile memory such as a hard disk, a flash memory, an SSD (Solid State Drive) or the like. The storage unit 12 stores various computer programs and data to be referred to by the control unit 11. The storage unit 12 may be an external storage device connected to the information processing apparatus 1. The storage unit 12 of the present embodiment stores a program 1P for causing the computer to execute processing related to ranking of workers, a worker DB (database) 121 and a work information DB 122.

A computer program (computer program product) including the program 1P may be provided in a non-transitory storage medium 1A readably recording the computer program. The storage unit 12 stores the computer program read from the recording medium 1A by a read-out device (not illustrated). The recording medium 1A is, for example, a magnetic disk, an optical disk, a semiconductor memory or the like. Moreover, the computer program may be downloaded from an external server connected to a communication network and stored in the storage unit 12. The program 1P may be constructed by a single computer program or multiple computer programs, or may be executed on a single computer or may be executed on multiple computers interconnected over a communication network.

The communication unit 13 has a communication module for communicating with an external device through a network N. The control unit 11 transmits and receives various information to and from the control device 5 via the communication unit 13.

The configuration of the information processing apparatus 1 is not limited to the description above, and the information processing apparatus 1 may be provided with, for example, a display unit for displaying various information, an operation unit for receiving an operation by the user and the like.

The summary of molding work using the injection molding machine 2 is described. The worker first performs a setup work for implementing operation of the injection molding machine 2 depending on the type of a molded product. The setup work includes preparation and exchange of equipment in the injection molding machine 2, peripheral devices and molding materials, for example. The setup work in the injection molding includes the preparation or exchange of the screw 32, the metal mold 41, the temperature regulation mechanism and the ejector mechanism as equipment in the injection molding machine 2, the preparation or exchange of a feeder, a molded product take-out device, a molded product transfer device and an inspection device as peripheral devices, and the preparation or exchange of resin materials. The setup work may be performed in the midway of the molding process.

In addition, the worker performs a condition setting work. The condition setting work is a work for setting molding conditions performed before start of actual molding, i.e., molding in mass production. The injection molding machine 2 receives settings for multiple molding conditions including mold temperature, heating cylinder temperature, mold clamping force, injection speed, filling speed and a holding pressure value and the like. The worker inputs set values to multiple molding conditions depending on the type of a molded product and performs test molding under the set values. During the test molding, a series of processes for obtaining a molded product is performed in the injection molding machine 2, including an injection process, a holding pressure process, a measurement process, a pressure reduction process, a cooling process, a mold closing process, a mold opening process and an ejection process. A series of actions from the start of the injection process until the start of the next injection process, for example, is called a "shot," and test molding of one or more shots is performed.

The worker confirms the state of a molded product obtained by the test molding, and changes set values for the molding conditions if finding quality abnormality, and performs test molding again. The worker repeats test molding until he/she can obtain a molded product satisfying desired quality and determines set values for the molding conditions to be applied to the actual molding.

The control device 5 controls the action of the injection molding machine 2 according to the set values for the molding conditions obtained through the condition setting. The injection molding machine 2 starts operation according to the molding conditions, and repeatedly performs the above-described processes from the injection process to the ejection process to produce molded products.

During the operation by the injection molding machine 2, the worker performs malfunction corrective work as necessary. The malfunction corrective work is a work for correcting various types of malfunctions occurring during the molding process. The injection molding machine 2 normally has an error stop function that temporarily stops the operation if it detects various types of abnormalities of the injection molding machine 2. In the case where an error stop occurs, the worker implements the work of correcting the state of the injection molding machine 2, such as changing the molding conditions, installing appropriate equipment or the like. In the case where the malfunction is resolved, the injection molding machine 2 restarts the operation. The malfunction corrective work includes correction concerning various types of errors related to the operation of the injection molding machine 2, not limited to correction concerning an error stop.

As described above, the molding process includes processes to be performed by the worker and processes to be automatically performed by the injection molding machine 2. In the case where multiple workers are engaged in the work, the work details for the processes to be performed by the workers vary depending on the experience and skill of the workers. In the present system, by collecting the work details for the workers in the work information DB 122 and evaluating the collected work details for each of the workers, the work of the workers can be ranked.

### <Worker DB 121>

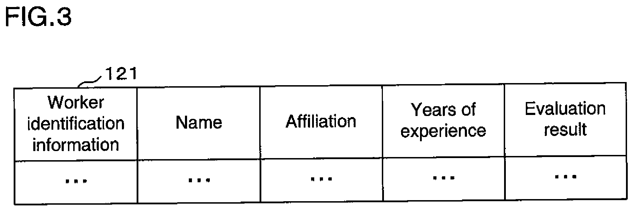

FIG. 3 is a diagram illustrating an example of the contents of the information stored in the worker DB 121. The worker DB 121 is a database for storing worker information on each of the multiple workers who can be a target to be ranked. The worker DB 121 stores a record in which the name, affiliation, years of experience, evaluation result and the like of a worker are associated using worker identification information as a key, for example.

The worker identification information indicates information that identifies a worker, including a worker ID and an employee number, for example. The affiliation indicates an affiliated department or a place of employment of the worker, including the name of a group, a department, an enterprise and a factory to which the worker belongs, for example. The years of experience indicates years the worker has been engaged in molding work. The evaluation result indicates the result of ranking to be described later. In the evaluation result column, the rank for each evaluation date may chronologically be stored.

### <Work Information DB 122>

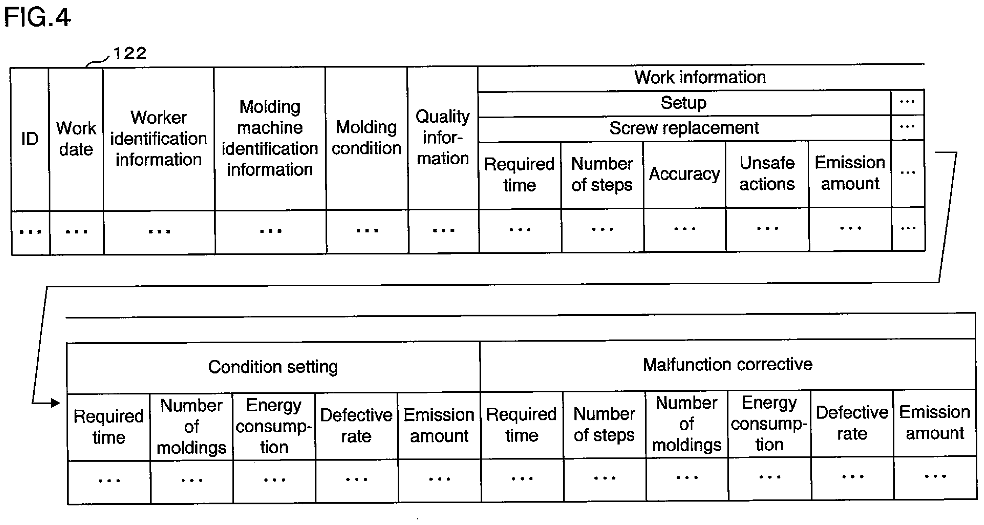

FIG. 4 is a diagram illustrating an example of the contents of the information stored in the work information DB 122. The work information DB 122 is a database that stores information related to work performed by the worker. The work information DB 122 stores a record in which a work date, worker identification information, molding machine identification information, a molding condition, quality information, work information and the like are associated using, for example, a data ID identifying molding work as a key.

The work date indicates the date and time when work is performed. The worker identification information is worker identification information of a worker who performs the work. The work information DB 122 and the worker DB 121 are set to be associated with each other by the worker identification information. The molding machine identification information indicates information identifying the injection molding machine 2 used for the work and includes, for example, a machine ID. The molding condition indicates a molding condition for the injection molding machine 2. The molding condition may include a series of molding conditions in the molding process, that is, initial values for the molding conditions, set values after condition setting and changed set values when change of the conditions is made after the start of the actual molding. The quality information indicates information on the quality of a molded product and includes inspection results obtained through quality inspection, for example.

The work information includes information on work performed by the worker. The work information column stores values of work information for the multiple items. The work information may store work information for each process performed by the worker. In the example illustrated in FIG. 4, the processes targeted for acquisition of work information include the setup process, the condition setting process and the malfunction corrective process.

The work information for the setup process includes time required for the setup work, the number of steps (travel amount) required for the setup work, the accuracy of the work procedure, the incidence of unsafe actions, and the amount of emission discharged during the setup work, for each of the multiple types of setup work as described above. The required time and required steps are examples of indicators representing work efficiency. Shorter required time and fewer required number of steps mean that the work by the worker is more efficient. The accuracy of the work procedure is how close the work procedure by the worker is to the predefined basic procedure. The accuracy of the work procedure is an example of an indicator representing the accuracy of the work. Higher accuracy means that the work procedure for the worker is closer to the predefined basic procedure and the work by the worker is more accurate. The incidence of unsafe actions indicates how often an unsafe action occurs during the work by the worker. The incidence of unsafe actions is an example of an indicator representing the safety of work. Lower incidence means that the work by the worker is safer. The amount of emission includes, for example, the amount of emission of greenhouse gases and hazardous substances. The amount of emission is an example of an indicator representing environmental load. Less amount of greenhouse gas emission and less amount of emission of hazardous substance mean that the environmental load imparted by the work for the worker is lower.

The work information for the condition setting process includes time required for the condition setting work, the number of moldings required for the condition setting work, the energy consumption of the injection molding machine 2 required for the condition setting work, a defective rate within a predetermined period after completion of the condition setting work, and an emission rate discharged by the condition setting work.

The number of moldings required for the condition setting work is the total number of shots for test molding. The number of moldings is one example of a molding quantity required for the condition setting work. The molding quantity may include the quantity and number of molded products required for the condition setting work. The required time, the required number of times and the required amount of energy are examples of indicators of the efficiency of the work. The predetermined period after the condition setting may be a period from the end of the condition setting until a predetermined time has elapsed or a period after the end of the condition setting until the specified number of shots has been molded. The defective rate is the percentage of defects in molded products. The defective rate is an example of the quality of molded products. Defects for molded products include, for example, flash, sink marks, flow marks, cracks, weld lines, voids, silver streaks and short shot. The defective rate is evaluated based on the observation by the worker or the inspection results carried out by an inspection device. The work information for the condition setting process may further include the accuracy of the work procedure and the incidence of an unsafe behavior.

The work information for the malfunction corrective process includes time required for malfunction corrective work, the number of steps required for the malfunction corrective process, the number of moldings required for the malfunction corrective work, the energy consumption of the injection molding machine 2 for the malfunction corrective work, the defective rate within a predetermined time period after the completion of the malfunction correction and the amount of emission discharged by the malfunction corrective work. The time required for the malfunction corrective work may include a time period from occurrence of a malfunction (error stop) to start of the malfunction correction and a time period from the start to end of the malfunction correction. The predetermined period after the malfunction correction may be a period from the end of the malfunction correction until a predetermined time has elapsed or a period after the end of the malfunction correction until the specified number of shots has been molded. The work information in the malfunction corrective process may further include the accuracy of the work procedure and the incidence of an unsafe action.

The work information is evaluated by the information processing apparatus 1 based on at least one of the imaging data and the operating data of the injection molding machine 2. In the case where molding work is performed by the injection molding machine 2, the control device 5 transmits imaging data and operating data related to the series of molding work to the information processing apparatus 1. The work information DB 122 may further store operating data and imaging data obtained during the work.

The imaging data is a dynamic image including imaging time from the start to the end of each of the series of molding processes, for example. The information processing apparatus 1 extracts features such as the position, posture and the like of the worker from the imaging data and performs pattern matching on the extracted features to specify the type of the setup work performed by the worker, the work details, the start time of the work, the end time of the work, the work procedure, the number of steps and the like. The required time for each work is evaluated based on the specified start time and end time. By comparing the work procedure corresponding to the specified work details and the pre-set basic procedure, the accuracy of the work procedure is evaluated. By comparing the specified work details and the unsafe action set in advance, the incidence of an unsafe action is evaluated. Note that the work details may be specified based on an operation history by the worker performing on the injection molding machine 2 that is acquired through the control device 5. Likewise, work information related to the condition setting work and the malfunction corrective work can also be acquired based on the imaging data.

The work information may be acquired based on operating data. The operating data is information indicative of an operating state of the injection molding machine 2. The operating data is acquired by the control device 5 as values corresponding to detection data by the sensors in the injection molding machine 2, molding conditions for the control device 5, data received from the peripheral devices and the like. The operating data includes, for example, molding machine identification information, operation history, motor current, the number of rotations of the screw 32, torque, the number of shots, defect information, and an error history of the injection molding machine 2. The operating data may be time series data for each of these values. From the operation history and power consumption of the injection molding machine 2 based on the operating data, the time required for the work, the energy consumption and the amount of emission for the injection molding machine 2, and the like are calculated. From the time-series shot count in the operating data, the number of molding required for the condition setting or the malfunction correction is calculated. From the time-series defect information in the operating data, a defective rate within a predetermined period is calculated.

The method of obtaining work information is not limited to the examples described above. The work information may be specified using methods such as machine learning, for example, or may be specified through reception of operation input from the worker via the control device 5. The worker can notify the start and end of the work by pressing a predetermined button at the time of start and end of the work, for example.

The information processing apparatus 1 stores, in the work information DB 122, the acquired various types of work information in association with the worker identification information, the molding machine identification information and the molding conditions. For example, the worker identification information is acquired by receiving login operation using worker account information through the operation unit of the control device 5 prior to the implementation of a molding work. The acquisition of the worker identification information may automatically be performed by the information processing apparatus 1. The information processing apparatus 1 may extract, from the imaging data, for example, facial features of the worker included in imaging data and may specify a worker or worker identification information of the worker included in the imaging data based on the extracted facial features according to the pattern matching method. Each time the information processing apparatus 1 acquires work information related to multiple workers, it stores the information in the work information DB 122. The work information DB 122 may chronologically store work information for each worker identification information. The work information DB 122 is updated as necessary.

The details of the work information are not limited to the examples described above, but the work information related to the process and work that are suitable for the ranking described below may be acquired depending on the type of the molding machine and the molding work.

### <Ranking Method>

Based on the work information related to multiple workers accumulated in the work information DB 122, the information processing apparatus 1 ranks the workers for each target period to be ranked and for each target unit to be ranked. The target period and target unit may be set in advance, or may arbitrarily be set for each ranking processing.

The target period may be, for example, the most recent day, week, month or the like, or an arbitrary period of time. The target unit may be, for example, one or more groups, one or more departments, one or more group facilities (factories), one or more enterprises, arbitrary workers, workers of arbitrary number of years of experience, or the like. The target units may also be set based on the molding details, for example, for each manufacturer of the injection molding machine 2, for each type of the injection molding machine 2, for each type of the metal mold 41, for each type of molding materials, for each process, for each defect type of a molded product (e. g., flash, sink marks, flow marks, cracks, weld lines, voids, silver streaks and short shot). The target units may be a combination of the aforementioned multiple units, for example, all the factories of company X and model A of the injection molding machine 2.

The information processing apparatus 1 extracts data that conforms to the target period for ranking based on the set target period and the information stored in the work information DB 122. The information processing apparatus 1 further specifies workers who conform to the set target unit based on the set target unit and the information stored in the worker DB 121, and specifies data including worker identification information of the specified workers as targets to be ranked. In the case where the molding details are set as the target unit, the information processing apparatus 1 may specify data to be ranked by further considering the work information DB 122, the molding conditions, the operating data and the like.

The information processing apparatus 1 evaluates the work information related to the multiple workers extracted from the work information DB 122 and ranks the workers. Ranking is performed by, for example, obtaining an item-based ranking through comparison of the values among the workers for each evaluation item regarding items included in the work information as evaluation items, and by obtaining an overall ranking through comprehensive evaluation of the rankings for all the item-based rankings. In other words, a ranking according to the shortness of the time required to exchange the screw for the setup work, a ranking according to the low number in the number of steps... are obtained, and an overall ranking based on the rankings for all evaluation items is evaluated. In the case where work information related to multiple works by the same worker is included within the target period, a ranking may be obtained by using the average of the values for the multiple work information. In the case where the target unit for ranking corresponds to a process base, an overall ranking may be evaluated based on the work information in the designated process (e.g., setup process, condition setting process, or malfunction corrective process).

### <Result Screen>

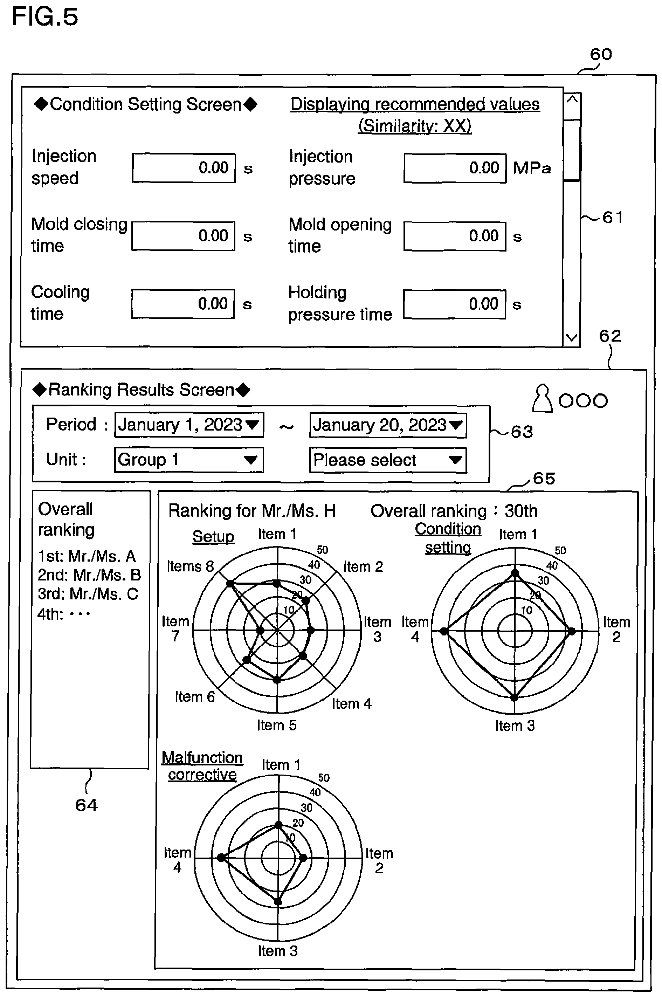

FIG. 5 is a schematic diagram illustrating an example of a screen 60 containing results of ranking. The results of ranking are offered to the worker through the control device 5. The control device 5 displays the screen 60 as illustrated in FIG. 5 on the display unit based on the screen information acquired from the information processing apparatus 1.

In the example illustrated in FIG. 5, the screen 60 contains a first display section 61 for displaying information related to the operation of the injection molding machine 2 and a second display section 62 for displaying ranking results. The first display section 61 and the second display section 62 are arranged side by side, for example, in an up-down direction or in a right-left direction of the screen 60.

The first display section 61 displays the molding conditions and the operating state of the injection molding machine 2. In FIG. 5, the first display section 61 has a function as a condition setting screen, and is configured to be able to receive input of set values for the molding conditions.

The second display section 62 contains a condition display section 63 for displaying the target period and the target unit for ranking, a list display section 64 for displaying the rankings of the workers in a list, and a detail display section 65 for displaying the ranking of an individual worker. In the example illustrated in FIG. 5, the name of the logged-in worker is displayed in the upper right corner of the second display section 62.

The condition display section 63 contains a target period entry field and a target unit entry field. The worker enters a target period and a target unit in the entry fields using the operation unit to thereby designate the desired target period and target unit. In the case where the control device 5 receives designation of a target period and a target unit through the condition display section 63, it transmits the designated target period and target unit to the information processing apparatus 1. Note that the target period and target unit that are set in advance as the initial conditions may be entered in the condition display section 63 immediately after login.

The list display section 64 displays the overall ranking of all the workers who satisfy the conditions displayed in the condition display section 63. The information processing apparatus 1 extracts work information from the work information DB 122 according to the initial conditions or the designated target period and target unit to perform ranking. The information processing apparatus 1 may specify the workers as the target unit including the worker to be displayed based on the worker identification information of the logged-in worker. The information processing apparatus 1 displays in the list display section 64 the overall ranking and the name of the workers in descending order. The list display section 64 may display an item-based ranking for each evaluation item.

The detail display section 65 displays the overall ranking concerning the individual worker and the item-based ranking for each evaluation item. The information processing apparatus 1 reads the ranking results corresponding to the worker identification information of the logged-in worker and displays them in the detail display section 65. The ranking results may be displayed using charts and tables. The information processing apparatus 1 generates a radar chart representing an item-based ranking for each evaluation item, for example. By displaying the item-based ranking for each evaluation item using charts and tables, rankings for multiple evaluation items can easily be grasped at a glance, which can visualize lower-ranked items. The information processing apparatus 1 may display the evaluation values used for ranking in the detail display section 65. As the item-based ranking for each evaluation item or the evaluation value, evaluation for one designated worker may be displayed, or evaluation for multiple workers may be displayed so as to be superposed on each other.

The information processing apparatus 1 may perform ranking, periodically at an evaluation timing set in advance, for each preset target unit using the work information collected during a predetermined period before the evaluation date as a target. The results of periodic ranking are initially displayed in the second display section 62, for example. Note that the second display section 62 may be displayed on a screen depicting only the ranking results, not be limited to those displayed on the same screen as the first display section 61. In addition, the output destination of the ranking results may not be limited to the control device 5 but may be a display device other than the control device 5. The ranking results may be offered to those other than the workers to be ranked, for example, a manager of the workers, a personnel evaluator or the like.

### <Processing Procedure>

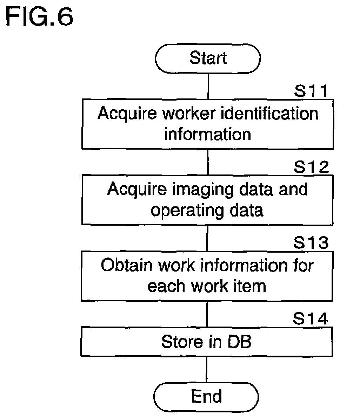

FIG. 6 is a flowchart depicting an example of a processing procedure for collecting work information. The processing performed in each flowchart is executed by the control unit 11 according to the program 1P stored in the storage unit 12 of the information processing apparatus 1.

The control unit 11 of the information processing apparatus 1 receives a login operation from the worker through the operation unit of the control device 5, for example, to acquire worker identification information of the worker who performs work (step S11). The control unit 11 acquires through the control device 5 imaging data and operating data related to the series of molding work implemented by the worker (step S12).

The control unit 11 obtains work information for each work item set in advance based on the acquired imaging data and operating data (step S13). The control unit 11 stores the acquired worker identification information and work information in association with each other in the work information DB 122 (step S14).

The control unit 11 repeatedly executes the aforementioned processing each time new work is implemented by the worker. This makes it possible to accumulate work information related to multiple molding works in the work information DB 122.

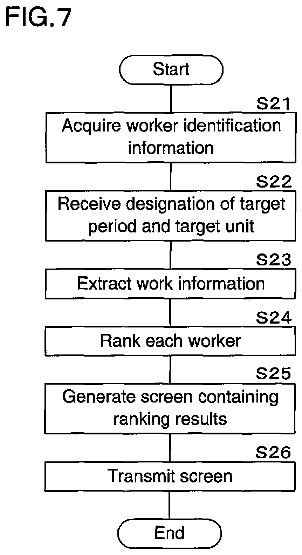

FIG. 7 is a flowchart depicting an example of a processing procedure related to ranking.

The control unit 11 of the information processing apparatus 1 receives a login operation from the worker through the operation unit of the control device 5, for example, to acquire worker identification information of the worker who is to be ranked (step S21). In the case where the worker identification information has already been known, step S21 may be skipped.

The control unit 11 receives designation of the target period and target unit to be ranked based on the operation through the control device 5 by the worker (step S22). In the case where the target period and target unit as the initial setting are used, step S22 may be skipped.

The control unit 11 extracts work information related to multiple workers that conform to the acquired worker identification information, target period and target unit, based on the information stored in the worker DB 121 and the work information DB 122 (step S23). The control unit 11 compares the values for each work information item in each extracted work information and ranks the workers (step S24). At step S24, the control unit 11 obtains the item-based ranking for each work information item for each worker and the overall ranking.

The control unit 11 generates a screen containing the results of the obtained ranking (step S25). The control unit 11 transmits the generated screen to the control device 5 (step S26) and displays the screen through the display unit of the control device 5. The control unit 11 ends the series of processing. The control unit 11 may return the processing to step S22 to receive designation of a new target period and target unit from the worker. If receiving the new target period and target unit, the control unit 11 executes ranking again according to the received new target period and target unit and outputs the execution results.

According to the present embodiment, providing workers with a ranking indicating the evaluation of the work information for the worker can stir up a feeling of rivalry among the workers, which improves their work motivation, leading to improvement of the skills of the workers. Ranking based on various evaluation items according to the molding work enables appropriate evaluation. By focusing on the work specific to the molding machines, such as the setup process, the condition setting process and the malfunction corrective process, evaluation of the work according to the actual situation is made possible. The ranking results can also be used for determining educational content for skill improvement and personnel evaluations.

Displaying the evaluation results for each evaluation item allows the worker to easily grasp his or her strengths and weaknesses, which leads to efficient improvement in skills. Since the target period and target unit to be ranked can arbitrarily be set, ranking workers can be made from various point of views. The ranking results are displayed along with the screen representing information related to operation of the molding machine, allowing workers to view the ranking results through their normal operations, increasing convenience.

### (Embodiment 2)

In Embodiment 2, a predetermined estimation model is trained using the details of work performed by workers of higher ranking.

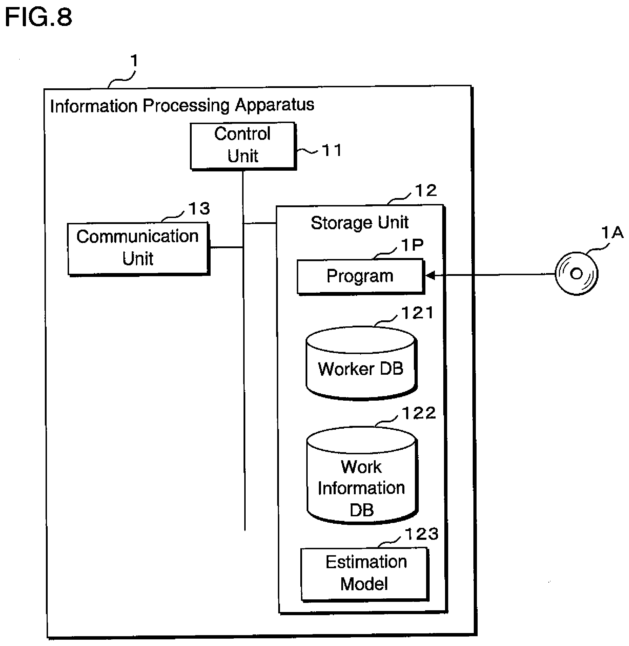

FIG. 8 is a block diagram illustrating an example of the configuration of an information processing apparatus 1 according to Embodiment 2. The information processing apparatus 1 according to Embodiment 2 stores an estimation model 123 in the storage unit 12. The estimation model 123 receives molding information related to molding by an injection molding machine 2 as input and outputs a recommended molding condition for the injection molding machine 2. The estimation model 123 is a learning model generated by machine learning. The estimation model 123 is expected to be used as a program module that is configured as a part of artificial intelligence software.

### <Estimation Model>

The molding information as input information to be input to the estimation model 123 includes molding machine information, molding material information, metal mold information, set values for molding conditions and defect information. The molding machine information includes, for example, molding machine identification information and a model name. The molding material information includes, for example, resin name, resin article number and resin physical properties. The metal mold information includes, for example, a mold ID, mold structure data and mold image data. The defect information is information related to a defect of molded products molded under the set values for the molding conditions. The defect information includes, for example, data indicative of the presence or absence of a defect, the type of a defect if there is the defect and the degree of the defect. The input information of the estimation model 123 may further include operating data of the injection molding machine 2, worker identification information and a worker rank.

The recommended molding condition, which is output information from the estimation model 123, corresponds to recommended values for the molding conditions relative to the injection molding machine 2. The molding conditions include, for example, injection speed, injection pressure, heater temperature, holding pressure, holding pressure switching position, injection start position, in-mold resin temperature, nozzle temperature, hopper temperature, mold clamping force, injection acceleration, injection stroke, cylinder tip resin pressure, reverse protection ring seating state, holding pressure switching speed, holding pressure completion position, cushion position, metering back pressure, metering torque, metering completion position, screw retreat speed, cycle time, mold closing time, injection time, pressure holding time, metering time, mold opening time, cooling time, screw rotational speed, mold opening/closing speed, ejection speed and ejection count. The recommended molding condition may be changed molding condition values for the molding conditions or the changed amount for the molding conditions.

The configuration of the estimation model 123 is not particularly limited, and can be built with well-known learning algorithms such as supervised learning, unsupervised learning, reinforcement learning or the like. The estimation model 123 may include, for example, a neural network, Recurrent Neural Network (RNN), Convolution Neural Network (CNN), Transformer, Support Vector Machine (SVM), Decision Tree and Deep Q-Network (DQN). The estimation model 123 exemplified by the neural network is described below.

Based on the ranking results of workers obtained by the ranking processing described in Embodiment 1, the information processing apparatus 1 extracts information corresponding to the work performed by workers having ranking results that satisfy predetermined criteria, and trains the estimation model 123 using the extracted information. The training of the estimation model 123 may be either training when building the estimation model 123 or re-training (fine-tuning) of a pre-trained estimation model 123.

### <Processing Procedure>

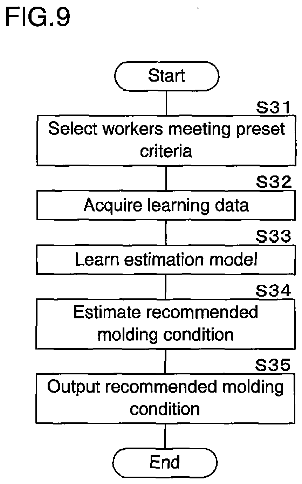

FIG. 9 is a flowchart depicting an example of the processing procedure to be executed by the information processing apparatus 1 according to Embodiment 2.

The control unit 11 of the information processing apparatus 1 selects workers having ranking results that satisfy the preset criteria with reference to the worker DB 121 (step S31). The criteria for selecting workers may be that at least one selected from the number of molding cycles, the energy consumption and the defective rate falls within a predetermined rank or is equal to or smaller than a predetermined value. The control unit 11 may select only the workers in the top rank in the number of molding cycles, the energy consumption or the defective rate.

The control unit 11 extracts the molding information corresponding to the work of the selected workers satisfying the predetermined criteria and the molding conditions with reference to the work information DB 122 to acquire learning data used for training the estimation model 123 (step S32). If the estimation model 123 is a neural network, the learning data corresponds to training data as a data set including the injection molding machine information, the molding material information, the mold information, the set values for the molding conditions and the defect information to which the recommended molding condition is attached. The recommended molding condition in the learning data may be molding condition after condition setting or changed molding conditions when the molding conditions are further changed after the start of the operation. When the work of multiple workers is selected, the control unit 11 may generate learning data by assigning greater weight to workers in the higher rank.

The control unit 11 learns the estimation model 123 based on the acquired learning data so that it outputs a recommended molding condition when molding machine information, molding material information, mold information, molding conditions and defect information are input (step S33). The control unit 11 optimizes parameters such as the weights or the like of the estimation model 123 by the error backpropagation method, the error gradient descent method or the like with the training data to perform machine learning on the estimation model 123. After completion of the learning, the control unit 11 stores the definition information on the trained estimation model 123 in the storage unit 12 as the trained estimation model 123.

The control unit 11 estimates a recommended molding condition for molding information in a new molding work by using the trained estimation model 123 (step S34). The control unit 11 acquires molding machine information, molding material information, mold information, molding conditions and defect information for new molding work through the control device 5 and inputs the acquired information to the estimation model 123 to acquire a recommended molding condition output from the estimation model 123.

The control unit 11 outputs the acquired recommended molding condition to the control device 5 (step S35) and displays the condition through the display unit of the control device 5. The recommended molding condition is displayed using the condition setting screen of the first display section 61 illustrated in FIG. 5, for example. The worker can determine the molding conditions to be input to the injection molding machine 2 by considering the recommended values for the molding conditions displayed on the condition setting screen.

At step S35, the control unit 11 may determine whether the output of the recommended molding condition from the estimation model 123 is appropriate based on the similarity between the input information used for estimating the recommended molding condition and the known reference input information. The control unit 11 calculates the similarity between the input information used for estimating the recommended molding condition and the known reference input information using an arbitrary method, and determines whether or not the calculated similarity is equal to or greater than a pre-set threshold. The reference input information is evaluated by considering, for example, the range of the molding conditions determined by the manager of the molding work, molding condition values obtained from the know-how of the skilled worker, and the molding condition values used for the analysis during designing of a mold. If determining that the calculated similarity is equal to or greater than the preset threshold, the control unit 11 outputs the recommended molding condition from the estimation model 123. When outputting the recommended molding condition, the control unit 11 outputs the similarity to the control device 5 in association with the recommended molding condition, and may display the recommended molding condition and the similarity together.

On the other hand, if determining that the calculated similarity is smaller than the preset threshold, the control unit 11 outputs the initial value of the molding conditions and information indicating the initial value instead of the recommended molding condition. If the calculated similarity is smaller than the preset threshold, the control unit 11 may blank the numerical display on the condition setting screen by not outputting the recommended molding condition.

In the processing described above, the control unit 11 may output the recommended molding condition estimated by the estimation model 123 only to workers who are not targeted for acquisition of learning data, that is, workers whose ranking results do not satisfy preset criteria.

In each of the embodiments described above, though an example where the information processing apparatus 1 executes the series of processing according to the flowchart is described, the entity of each processing is not limited thereto. Each processing according to the flowchart may be executed in the control device 5.

According to the present embodiment, the degree of utilization of the ranking results can be increased. The use of data related to workers with the ranking result satisfying the predetermined criteria, that is, data related to the work by the workers with higher skills as training data can improve the efficiency and accuracy of the learning of the estimation model 123. The use of the acquired estimation model 123 makes it possible to accurately estimate the recommended molding condition for molding work in similar environments.

The embodiments disclosed herein are illustrative in all respects, and should be considered not to be restrictive. Technical characteristics described in the respective embodiments can be combined with each other, and the scope of the invention is intended to include all modifications within a scope of the appended claims and a scope equivalent to the scope of the appended claims.

The sequence shown in each embodiment is not limited, and to the extent that there is no conflict, each processing procedure may be performed in a different order, or multiple processing may be performed in parallel. The processing entity of each processing is not limited, and the processing of each device may be executed by another device within the scope of consistency.

The matters described in each embodiment can be combined with each other. Moreover, independent claims and dependent claims stated in the scope of claims can be combined with each other in any combination, regardless of dependency. In addition, the scope of claims uses the form of describing claims that depend on two or more other claims (multi-claim format), though not limited to this format. The scope of claims uses the form of describing multiple claims that depend from at least one multiple claims (multi-multi claims).

Concerning the above-mentioned embodiments, the following clauses are further disclosed.

### Clause 1

An information processing method causing a computer to execute processing of:
acquiring identification information of a plurality of workers who perform work related to a molding machine and work information on work performed by each of the workers;
ranking the plurality of workers based on the acquired work information of the plurality of workers; and
providing the plurality of workers with a ranking result.

### Clause 2

The information processing method according to clause 1, wherein the work information includes at least one of a required time for the work, energy consumption of a molding machine, a molding quantity, environmental load, accuracy of the work, efficiency of the work, safety of the work, a defective rate within a predetermined period after completion of the work and quality of a molded product.

### Clause 3

The information processing method according to clause 1 or 2, further causing a computer to execute processing of:
acquiring the work information for a plurality of items, and
performing the ranking for each item of the work information.

### Clause 4

The information processing method according to any one of clauses 1 to 3, wherein the work includes at least one of work concerning a setup process, work concerning a condition setting process and work concerning a malfunction corrective process.

### Clause 5

The information processing method according to any one of clauses 1 to 4, further causing a computer to execute processing of:
receiving designation of a target unit to be ranked, and
performing the ranking by the designated target unit.

### Clause 6

The information processing method according to any one of clauses 1 to 5, further causing a computer to execute processing of:
acquiring a molding condition corresponding to a worker having the ranking result satisfying predetermined criteria; and
training, by machine learning using the acquired molding condition, an estimation model estimating a molding condition relative to information on molding by a molding machine.

### Reference Signs List

100 information processing system
1 information processing apparatus
11 control unit
12 storage unit
13 communication unit
1A recording medium
1P program
121 worker DB
122 work information DB
123 estimation model
2 injection molding machine
3 injection device
4 mold clamping device
5 control device
7 imaging device

## Claims

1. An information processing method causing a computer to execute processing of:
acquiring identification information of a plurality of workers who perform work related to a molding machine and work information on work performed by each of the workers;
ranking the plurality of workers based on the acquired work information of the plurality of workers; and
providing the plurality of workers with a ranking result.

2. The information processing method according to claim 1, wherein the work information includes at least one of a required time for the work, energy consumption of a molding machine, a molding quantity, environmental load, accuracy of the work, efficiency of the work, safety of the work, a defective rate within a predetermined period after completion of the work and quality of a molded product.

3. The information processing method according to claim 1 or 2, further causing a computer to execute processing of
acquiring the work information for a plurality of items, and
performing the ranking for each item of the work information.

4. The information processing method according to any one of claims 1 to 3, wherein the work includes at least one of work concerning a setup process, work concerning a condition setting process and work concerning a malfunction corrective process.

5. The information processing method according to any one of claims 1 to 4, further causing a computer to execute processing of:
receiving designation of a target unit to be ranked, and
performing the ranking by the designated target unit.

6. The information processing method according to any one of claims 1 to 5, further causing a computer to execute processing of:
acquiring a molding condition corresponding to a worker having the ranking result satisfying predetermined criteria; and
training, by machine learning using the acquired molding condition, an estimation model estimating a molding condition relative to information on molding by a molding machine.

7. A computer program causing a computer to execute processing of:
acquiring identification information of a plurality of workers who perform work related to a molding machine and work information on work performed by each of the workers;
ranking the plurality of workers based on the acquired work information of the plurality of workers; and
outputting a ranking result to the plurality of workers.

8. An information processing apparatus comprising a control unit executing processing of:
acquiring identification information of a plurality of workers who perform work related to a molding machine and work information on work performed by each of the workers;
ranking the plurality of workers based on the acquired work information of the plurality of workers; and
outputting a ranking result to the plurality of workers.
